# EUROPEAN PATENT SPECIFICATION

(11) **EP 1 804 566 B1**
(45) Date of publication and mention of the grant of the patent: **17.08.2011**
(21) Application number: 05802378.9
(22) Date of filing: 18.10.2005
(51) Int. Cl.: A01D 34/73

(54) **UNIVERSAL CUTTING DEVICE FOR PORTABLE TRIMMERS**
UNIVERSAL-SCHNEIDVORRICHTUNG FÜR TRAGBARES SCHNEIDGERÄT
DISPOSITIF DE COUPE UNIVERSEL POUR DEBROUSSAILLEUSES PORTABLES

(30) Priority: 19.10.2004 PT 10320304
(43) Date of publication of application: 11.07.2007
(73) Proprietor: INEGI-INSTITUTO DE ENGENHARIA MECÂNICA E GESTÃO INDUSTRIAL, 4465-591 Leça do Balio (PT)
(72) Inventor: CORREIA DE SÁ PORTOCARRERO, Marco Paulo, 4910 Caminha (PT); MACHADO GOMES DA SILVA, João Francisco, 4200-602 Porto (PT); TORRES MARQUES, Antonio, 4460-431 Matosinhos (PT)
(74) Representative: Ferreira, Maria Silvina
(86) International application number: PCT/IB2005/053416
(87) International publication number: WO 2006/043239

(56) References cited:
- FR-A- 2 835 393
- US-A- 5 617 636
- US-A- 5 640 836
- US-A- 5 845 405
- US-A- 5 887 349
- US-A- 6 052 907
- US-A1- 2002 066 263

## Description

### Field of Invention

Universal cutting device for portable clearing equipments.

### State of the art

Portable trimmers are devices with a thermal combustion engine that transmits rotational motion trough an axis which can have different lengths, to a device, allowing the cut of different kinds of vegetation.

Today, there are several kinds of said cutting devices, distinguished, among other features, by:
1. accessories for grass cutting:
   1. several models of twine heads working with several lines, generally of polymeric material (polyamide);
   2. knife heel head coupled to the trimmer, only trough one side, and works by using the centrifugal force on the mentioned plastic blades which are fixed with bearings or metallic bushes.
2. accessories for heavy grass, although not ligneous:
   1. here are several variants of rigid disks with three or more teeth made with different heights for the different vegetation to cut;
   2. disks allowing the substitution of blades rigidly fixed therein;
   3. rigid blade, folded on both ends, specially designed for the grinding of non ligneous vegetation;
3. accessories for cutting small trees:
   1. circular blades with different teeth configurations that can include diamond materials
   2. chains similar to the ones used in power chainsaws , placed on a rigid device.
A cutting device disclosing all the features of the preamble of claim 1 is disclosed in the document US-5640836-A.

### Detailed Description of the Invention

The object of the invention is a cutting device for portable trimmers as claimed in claim 1 that can be coupled to any portable trimmer model commercially available. It allows cleaning (by cutting) efficiently any kind of vegetation, from grass to small trees.

This device was designed and conceived to keep cutting efficiently even after continuous impacts against hard objects (e.g., stones, iron) generally present in the fields that are invaded with vegetation in general. In the existing accessories for trimmers the said impact against hard objects deeply limits its usable life time constraining an early substitution.

On the other hand, all existing accessories have a specific use, related with the kind of vegetation that they should cut; there are tools for vegetation like grass, others for more fibrous vegetation, others for cutting thin ligneous vegetation and finally, others that allow cutting small trees. The developed device allows, due to its characteristics, the substitution with advantages of all existing accessories by this one that cuts efficiently from small grass to small trees and therefore having productivity profits.

The innovative device is made of several metallic blades conveniently fixed to a rigid support and that vary automatically their cutting angle according to the found cutting force. In limit situations (which can arise from the impact against a stone) they can make a complete rotation around their own axis and be able to cut again. The cutting angle results from the balance between the cutting force and the centrifugal one.

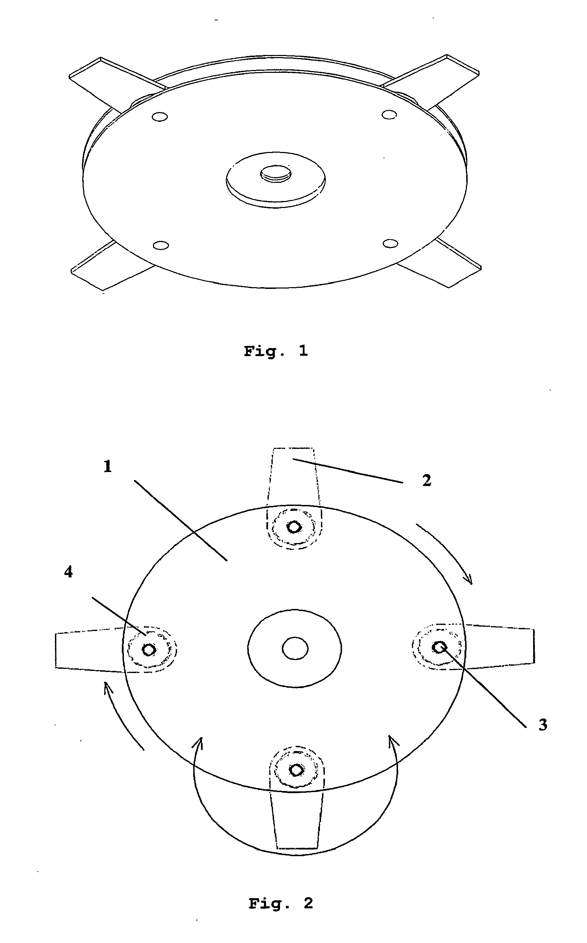

The developed device (see figure 1) is made of a main platform (1) with axial symmetry, allowing its use with both sides coupled to the existing trimmers. The cutting blades (in number of two or more) (2) can be fixed to this main system through double bushes - one being made from a friction resistant material (3) fixes the two parts of the main fixing system and a second one (4), made of a material with less friction resistance than the blades or the bushes 3. Thus, any accidental ejection of the blades is excluded.

## Claims

1. Cutting device to be used with portable trimmers made up by more than one metallic blades (2) that are fixed to a rigid system with a generic circular shape (1), and for which the cutting angle varies automatically according to the found cutting force, being such defined as a result, of the balance between the centrifugal and cutting forces, **characterized in that** the rigid system with a generic circular shape (1) allows work with both of its sides coupled to the commercially available trimmers, where two or more metallic blades (2) are fixed through, at least, two bushes, one of them (3) made of a friction resistant material should be fixed to the fixing system, and the other (4) made of a less friction resistant material than the blade or the bushes referenced (3) and to be manufactured with the appropriated drawing clearances, allowing for a safe and mild work, based on the balance between the centrifugal force and the force required to cut the vegetation.

2. Cutting device for trimmers according to claim 1 **characterized in that** it can be attached to the trimmer, undistinguishly, from whichever of both sides, allowing an equilibrated blade detrition and therefore extending its wear-out life.

## Patentansprüche

1. Schneidevorrichtung für tragbare Schneidemaschinen umfassend eine Mehrheit von Metallklingen (2), die an einem festen System in Scheibenform (1) befestigt sind, und deren Schnittwinkel sich automatisch der gegebenen Schnittkraft anpasst, was als Ausgleichergebnis zwischen Zentrifugal- und Schnittkraft definiert wird, **dadurch gekennzeichnet dass** das feste System in Scheibenform (1) den beidseitigen Gebrauch der Mähscheibe mit entsprechendem Anschluss an den käuflichen Schneidemaschinen erlaubt, wohin zwei oder mehr Metallklingen (2) durch mindestens zwei Wellen befestigt sind, wohin eine (3), die aus reibungsbeständigem Material fertig ist, an dem Befestigungssystem angebracht werden soll, und die andere (4), die aus weniger reibungsbeständigem Material als die Klinge oder die erwähnte Wellen (3) fertig ist, mit der geeigneten Spielen hergestellt wird, um eine sichere und leichte Funktionierung zu erlauben aufgrund dem Ausgleich zwischen Zentrifugalkraft und der beim Schneiden der Vegetation benötigten Kraft.

2. Schneidevorrichtung für Schneidemaschinen nach Anspruch 1, **dadurch gekennzeichnet dass** sie in gleicher Welse, von beiden Seiten, an der Schneidemaschine befestigt werden kann, wodurch die Klingenabnutzung ausgewogen ist und somit die Lebensdauer verlängert wird.

## Revendications

1. Dispositif de coupe pour débroussailleuse portable formée par plus qu'une lame métallique (2) fixées à un system rigide de forme circulaire (1) et pour lesquelles l'angle de coupe varie automatiquement selon la force de coupe rencontrée, qui peut être définie come la résultante de l'équilibre entre forces centrifuges, **caractérisé en ce que** le system rigide de forme circulaire (1) permet du travail avec les deux cotés accouplé aux débroussailleuses disponibles dans le commerce, où deux ou plus lames métalliques (2) sont fixées par deux coussinets, où l'un (3) est réalisé avec un matériel résistant à la friction et peut être fixé au system de fixation, et l'autre (4) est réalisé avec un matériel moins résistant a la friction que la lame ou les coussinets référencé (3) et est fabriqué avec une marge permettant un fonctionnement sur et suave, basée sur l'équilibre entre la force centrifuge et la force exigé pour couper la végétation.

2. Dispositif de coupe pour débroussailleuse selon la revendication 1, **caractérisé en ce qu'**il peut être attaché aux débroussailleuses indistinctement par l'une des deux faces, permettant ainsi une usure équilibrée des lames et par conséquence d'allonger leur durée de vie.
